# EUROPÄISCHE PATENTSCHRIFT

(11) **EP 1 017 731 B1**
(45) Veröffentlichungstag und Bekanntmachung des Hinweises auf die Patenterteilung: **13.11.2002**
(21) Anmeldenummer: 98947441.6
(22) Anmeldetag: 19.08.1998
(51) Int. Cl.: C08F 12/08, C08L 25/06

(54) **STYROLPOLYMERE MIT BIMODALER MOLEKULARGEWICHTSVERTEILUNG**
STYRENE POLYMER WITH BIMODAL MOLECULAR WEIGHT DISTRIBUTION
STYRENE-POLYMERE A DISTRIBUTION BIMODALE DES POIDS MOLECULAIRES

(30) Priorität: 01.09.1997 DE 19738082
(43) Veröffentlichungstag der Anmeldung: 12.07.2000
(73) Patentinhaber: BASF AKTIENGESELLSCHAFT, 67056 Ludwigshafen (DE)
(72) Erfinder: LÄTSCH, Stefan, D-66953 Pirmasens (DE); LOTH, Wolfgang, D-67098 Bad Dürkheim (DE); NIESSNER, Norbert, D-67159 Friedelsheim (DE); FISCHER, Wolfgang, D-69190 Walldorf (DE)
(86) Internationale Anmeldenummer: EP9805276
(87) Internationale Veröffentlichungsnummer: WO99011679

(56) Entgegenhaltungen:
- EP-A- 0 390 000
- US-A- 2 643 993
- US-A- 4 245 057

## Beschreibung

Die Erfindung betrifft Styrolpolymere mit mindestens bimodaler Molekulargewichtsverteilung.

Des Weiteren betrifft die Erfindung die Verwendung der Styrolpolymeren zur Herstellung von Fasern, Folien und Formkörpern sowie die daraus erhältlichen Fasern, Folien und Formkörper.

Abmischungen von Styrolpolymeren mit sehr geringen Mengen ultra-hochmolekularen Styrolpolymeren (Molekulargewicht über 2 000 000 g/mol) sind beispielsweise aus den japanischen Patentanmeldungen JP A 03033142 und JP A 83 107912 bekannt. Sie weisen ein ausgewogenes Eigenschaftsprofil hinsichtlich Zähigkeit, Wärmebeständigkeit und thermoplastischer Verarbeitbarkeit auf. Die ultra-hochmolekularen Styrolpolymeren werden durch anionische Polymerisation, Emulsionspolymerisation oder mittels einem mehrfunktionellen Katalysator mit niedriger Zersetzungstemperatur hergestellt und anschließend mit herkömmlichen Styrolpolymeren in Lösung oder als Granulat vermischt.

Sambasivam et. al. berichten in Journal of Applied Polymer Science, Vol. 58, Seite 357 - 366 (1995) über die Bruchmechanik von Polystyrolfilmen. Hierzu wurden Blends aus wäßrigen Dispersionen von anionisch polymerisierten Polystyrolen mit zahlenmittleren Molekulargewichten von 600 000 g/mol und von 34 000 g/mol hergestellt. Die Dispersionen wurden über eine aufwendige Miniemulsionstechnik unter Zusatz von Tensiden und Hilfsmitteln erhalten. Die Bruchenergie der hieraus hergestellten, extrahierten und getrockneten Polystyrolfilme hing stark von der Temperzeit der Filme ab.

Aus der US 4,245,057 sind Abmischungen aus 40 bis 95 Gew.-% Polystyrol mit einem zahlenmittleren Molekulargewicht von 200 000 bis 600 000 g/mol und 5 bis 60 Gew.-% schlagzähmodifiziertem Polystyrol bekannt. Die Polymerkomponenten wurden getrennt hergestellt und in Lösung oder im Extruder vermischt. Die Abmischungen besitzen höhere Kerbschlagzähigkeiten als die Summe der Schlagzähigkeiten der Einzelkomponenten.

Bei den genannten Abmischungen wird der hochmolekulare Styrolpolymeranteil getrennt hergestellt. Die Homogenisierung von Polymeren mit stark unterschiedlichen Molekulargewichten ist aber in der Regel schwierig und zeitaufwendig. Für eine gute Homogenisierung muß man entweder mit sehr verdünnten Lösungen oder in der Schmelze oder in hochviskosen Lösungen bei hohen Scherkräften und sehr langen Homogenisierungszeiten arbeiten. Deswegen ist das Molekulargewicht der hochmolekularen Komponente für die Homogenisierung in technischen Apparaturen bei einer wirtschaftlich vertretbaren Zeitdauer oftmals limitiert. Außerdem beobachtet man einen scherbedingten Abbau des Molekulargewichtes. Die vollständige Vermischung ist aber gerade für die Eigenschaften, insbesondere für eine hohe Schlagzähigkeit der Polymerblends ausschlaggebend. Bei unvollständiger Homogenisierung sind die Eigenschaften zudem stark schwankend und von den Verarbeitungsbedingungen abhängig.

Aufgabe der Erfindung war es, Styrolpolymere und Styrolpolymerzusammmensetzungen mit guten mechanischen Eigenschaften, insbesondere einer hohen Schlagzähigkeit bei gleichzeitig guter thermischer Verarbeitbarkeit bereitzustellen.

Des Weiteren sollte ein Verfahren gefunden werden, das es erlaubt, die Styrolpolymeren in situ und ohne getrennten Abmischungs- und Homogenisierungsschritt einfach und reproduzierbar herzustellen.

Demgemäß wurden Styrolpolymere mit mindestens bimodaler Molekulargewichstverteilung gefunden, wobei der hochmolekulare Anteil, ermittelt aus der Molmassenverteilungsdarstellung, ein Molekulargewicht im Peakmaximums Mₚ von mindestens 800 000 g/mol aufweist und mindestens 5 Flächenprozent ausmacht, und die Styrolpolymere durch anionische Polymerisation von vinylaromatischen Monomeren mit mindestens zweimaliger Initiatordosierung erhältlich sind.

Die Styrolpolymeren weisen eine mindestens bimodale Molekulargewichtsverteilung auf. Bevorzugt wird eine bimodale Verteilung. Der hochmolekulare Anteil beträgt mindestens 5 Flächenprozent, bevorzugt mindestens 10 Flächenprozent und besonders bevorzugt mindestens 15 Flächenprozent an der Gesamtfläche in der Molmassenverteilungsdarstellung. Der maximale, hochmolekulare Anteil wird von der Viskosität und Verarbeitbarkeit begrenzt. Im allgemeinen beträgt er höchstens 30 Flächenprozent an der Gesamtfläche in der Molmassenverteilungsdarstellung. Unter Molmassenverteilungsdarstellung versteht man die nach Kalibrierung erhaltene Verteilungskurve der aus der Gelpermeationschromatographie erhaltenen Retensionszeiten. Die Trennung des hochmolekularen Anteils von anderen, niedermolekularen Anteilen erfolgt durch das Fällen des Lots am Minimum zwischen den Anteilen. Der hochmolekulare Anteil besitzt ein Molekulargewicht im Peakmaximums Mₚ von mindestens 800 000 g/mol, bevorzugt im Bereich von 1 000 000 bis 5 000 000 g/mol und besonders bevorzugt von 1 500 000 bis 3 000 000 g/mol.

Das Molekulargewicht im Peakmaximum Mₚ der niedermolekularen Anteile liegt in der Regel im Bereich von 50 000 bis 500 000 g/mol.

Die Styrolpolymeren können Homo- oder Copolymere oder Mischungen davon sein. Zur Herstellung der Styrolpolymeren können die üblichen anionisch polymerisierbaren vinylaromatischen Monomeren angewendet werden, die die üblichen Reinheitsanforderungen, wie vor allem Abwesenheit von protischen Verunreinigungen, erfüllen. Beispielsweise sind hierfür Styrol, α-Methylstyrol, p-Methylstyrol, Ethylstyrol, tert.-Butylstyrol, Vinyltoluol oder 1,1-Diphenylethylen oder Mischungen davon geeignet. Besonders bevorzugt wird Styrol verwendet.

Als Initiatoren für die anionische Polymerisation kommen die üblichen mono-, bi- oder multifunktionellen Alkalimetallalkyle oder -aryle in Betracht. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Hexyldiphenyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol.

Die erfindungsgemäßen Styrolpolymeren werden nach den an sich bekannten Verfahren der anionischen Polymerisation durch mindestens zweimalige Initiatordosierung erhalten. Die Menge der jeweiligen Initiatordosierungen ergibt sich aus den gewünschten Mengenanteilen und Molekulargewichten der Styrolpolymerenverteilung. Die gesamte benötigte Initiatormenge liegt in der Regel im Bereich von 0,002 bis 5 Molprozent bezogen auf die zu polymerisierende Monomermenge, wobei etwa 1 bis 10 % der gesamten Initiatormenge auf die erste Dosierung zur Bildung des hochmolekularen Anteils fallen.

Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Benzol, Alkylbenzole wie Toluol, Xylol, Ethylbenzol oder Dekalin oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und vor Verwendung destilliert werden.

Nach erfolgtem Molekuargewichtsaufbau können die "lebenden" Polymerkettenenden mit den für die anionische Polymerisation üblichen Kettenabbruch- oder Kopplungsmittel umgesetzt werden. Als Kettenabbruchmittel eignen sich protonenaktive Substanzen oder Lewis-säuren wie beispielsweise Wasser, Alkohole, aliphatische und aromatische Carbonsäuren sowie anorganische Säuren wie Kohlensäure, Phosphorsäure oder Borsäure.

Zur Kopplung der Polymeren können mehrfunktionelle Verbindungen wie beispielsweise polyfunktionelle Aldehyde, Ketone, Ester, Anhydride oder Epoxide eingesetzt werden, wodurch man eine Molekulargewichtsverdopplung im Falle der Verwendung von bifunktionellen Kopplungsmitteln oder die Bildung von verzweigten oder sternförmigen Polymeren im Falle von höherfunktionellen Kopplungsmittel erreicht.

Die Styrolpolymeren können in jedem temperaturfesten Reaktor hergestellt werden, wobei es technisch nicht darauf ankommt, ob es sich um rückvermischende oder nicht rückvermischende Reaktoren handelt. Geeignet sind zum Beispiel Rührkessel, Schlaufenreaktoren sowie Rohrreaktoren oder Rohrbündelreaktoren mit oder ohne Einbauten. Einbauten können statische oder bewegliche Einbauten sein.

Die Umsetzung kann beispielsweise bei einer Temperatur im Bereich von 20°C bis 150°C durchgeführt werden. Bevorzugt ist ein Temperaturbereich von 30°C bis 120°C, wobei eine konstante Temperaturführung nicht notwendig ist.

Die erfindungsgemäßen Styrolpolymeren können sowohl im Batch- als auch im kontinuierlichen Verfahren hergestellt werden, wobei die Initiatordosierungen im Batchverfahren zeitlich versetzt, im kontinuierlichen Verfahren räumlich versetzt erfolgen. Die Monomeren und Lösungsmittel können auf einmal zu Beginn (bzw. im kontinuierlichen Verfahren am Reaktoreingang) oder teilweise zu einem späteren Zeitpunkt (bzw. an einem weiter stromabwärts liegenden Reaktorabschnitt) zudosiert werden. Zweckmäßigerweise erfolgen die erste und alle folgenden Monomer- und Initiatordosierungen jeweils gleichzeitig oder nahezu gleichzeitig und in den entsprechend dem Molekulargewicht und dem gewünschten Molekulargewichtsanteil berechneten Molverhältnissen.

Die erfindungsgemäßen Styrolpolymeren zeigen aufgrund der homogen Verteilung des hochmolekularen Anteils sehr gute mechanische Werte, insbesondere eine hohe Schlagzähigkeit bei gleichzeitig guten Fließeigenschaften.

Die erfindungsgemäßen Styrolpolymeren eigenen sich hervorragend zur Abmischung mit allen mit Polystyrol verträglichen Polymeren, insbesondere weiteren Styrolpolymeren. Die Abmischungen können 5 bis 90 Gew.-%, bevorzugt 10 bis 70 Gew.% des erfindungsgemäßen, mindestens bimodalen Styrolpolymeren bezogen auf die gesamte Polymerzusammensetzung enthalten. Zusätzlich können den Abmischungen übliche Zusatz- und Hilfsstoffe zugesetzt werden. Als weitere Styrolpolymere kommen Homopolystyrol und Copolymere des Styrols mit vinylischen Comonomeren, vor allem mit Acrylnitril, Maleinsäureanhydrid, Methylmethacrylat, sowie deren mit Kautschuken schlagzäh modifizierten Polymerzusammensetzungen in Betracht. Die Herstellung dieser weiteren Styrolpolymeren ist bekannt und beispielsweise in A. Echte, Handbuch der Technischen Polymerchemie, Verlag VCH Weinheim, 1993, Kapitel 8.3 Seite 475 ff beschrieben. Besonders bevorzugt werden Abmischungen mit radikalisch hergestelltem Standard-Polystyrol und mit schlagzähmodifiziertem Polystyrol. Als schlagzähmodifiziertes Polystyrol können alle kautschukmodifizierten, insbesondere durch Polybutadien oder Styrol-Butadien-Blockcopolymere modifizierten Polystyrole verwendet werden.

Die Abmischungen mit den erfindungsgemäßen, bimodalen oder höhermodalen (z.B. drei- oder viermodalen) Styrolpolymeren zeichnen sich durch eine sehr hohe Zähigkeit und Reißfestigkeit aus. Dies erlaubt beispielsweise eine Reduzierung des Mengenanteils des teureren, schlagzähen Polystyrols gegenüber Mischungen aus Standard-Polystyrol und schlagzähmodifiziertem Polystyrol bei gleichbleibenden mechanischen Eigenschaften der Polymermischung. Bei höheren Anteilen an schlagzähem Polystyrol ist eine Verarbeitung zu Fertigteilen mit geringerer Wandstärke möglich.

### Beispiele

Für die Beispiele wurde frisch destilliertes, wasserfreies Styrol, destilliertes und über Aluminiumoxid getrocknetes Cyclohexan sowie über Molekularsieb vorgetrocknetes Butadien verwendet. Als Initiator wurde eine 12 gew.-%ige Lösung von sec.-Butyllithium in n-Hexan verwendet.

Die Molekulargewichte wurden mittels Gelpermeationschromatographie (GPC) an Polystyrol-Gel-Säulen vom Typ Mixed B der Fa. Polymer Labs. mit monodispersen Polystyrolstandards bei Raumtemperatur und Tetrahydrofuran als Eluens bestimmt. Der hochmolekulare Polystyrolanteil wurde durch das Fällen des Lotes am Minimum der Molmassenverteilungsdarstellung nach Kalibrierung und Integration der Teilflächen bestimmt.

Der Reststyrolgehalt wurde kapillargaschromatographisch mit Helium als Trägergas und einem Flammenionisationsdetektor bestimmt.

Der Schmelzindex MVR (200°C/5 kg) wurde gemäß ISO 1133 bestimmt.

Die Probekörper für die mechanischen Prüfungen wurden bei 220°C Massetemperatur und 45°C Formtemperatur gespritzt. E-Modul, Streckspannung, Bruchspannung, Streckdehnung und Bruchdehnung wurden im Zugversuch nach ISO 527 mit Zugstäben gemäß ISO 3167 ermittelt.

Die Charpy-Schlagzähigkeit wurde nach ISO 179/1eU, Die Charpy-Kerbschlagzähigkeit wurde nach ISO 179/1eA an gespritzten Formkörpern mit den Abmessungen 80x10x4 mm geprüft.

Der Glanz wurde an 1,5 mm starken, gespritzten planaren Probekörpern bei 20°, 65° und 85° Einfallswinkel bestimmt, wobei 100 Skalenteile (SKT) Totalreflexion an einer Grenzfläche bedeuten. Werte über 100 Skalenteile bedeuten Reflexion sowohl an Ober- als auch Unterseite. Die Transparenz wurde relativ zueinander gegen Luft an einem 4 mm starken, gespritzten Formteil bestimmt.

Die Vicat-Erweichungstemperaturen VST/A und VST/B wurden nach der Prüfvorschrift DIN ISO 306 bestimmt.

### Beispiel 1

In einem 1,5 m³ Rührkessel wurden 200 1 Cyclohexan und 33,7 kg Styrol vorgelegt, mit sec.-Butyllithium bis zur leichten Rotfärbung titriert und mit 25 ml sec-Butyllithiumlösung(s-BuLi 1) versetzt. Anschließend wurde der Reaktor auf 60°C (Wandtemperatur) erhitzt, um die Polymerisation zu starten. Innerhalb von 30 Minuten stieg die Temperatur der Polymerisationslösung auf 105°C an. Nach 5 Minuten wurde das hochviskose Reaktionsgemisch mit 440 1 Cyclohexan versetzt und auf 30°C abgekühlt. Nach Zugabe von weiteren 198 kg Styrol und 790 ml sec.-Butyllithiumlösung. (s-BuLi 2) stieg die Temperatur erneut an und erreichte innerhalb 15 Minuten 115°C. Nach einer Nachpolymerisationszeit von 10 Minuten wurde die Polymerlösung mit 100 ml Isopropanol versetzt. Anschließend wurde die Polymerlösung auf 200°C erwärmt, in einen Rohrbündelwärmetauscher entspannt und über einen Entgasungsextruder vom Restlösungsmittel befreit. Die Molmassen und Molmassenverteilungen wurden mittels Gelpermeationschromatographie bestimmt und sind in Tabelle 1 zusammengestellt.

### Beispiele 2 - 7

Das Beispiel 1 wurde wiederholt mit dem Unterschied, daß die in Tabelle 1 genannten Initiatordosierungen s-BuLi 1 und s-BuLi 2 verwendet wurden. Im Falle von Beispiel 7 wurde bei der Extrusion 3 Gew.% Weißöl, bezogen auf den Polymerfestkörper zugesetzt.
Die Molmassen und Molmassenverteilungen wurden mittels Gelpermeationschromatographie bestimmt und sind in Tabelle 1 zusammengestellt. Die Ergebnisse der mechanischen Prüfungen der Styrolpolymeren aus den Beispielen 2, 3, 4 und 7 sind in Tabelle 2 zusammengestellt.

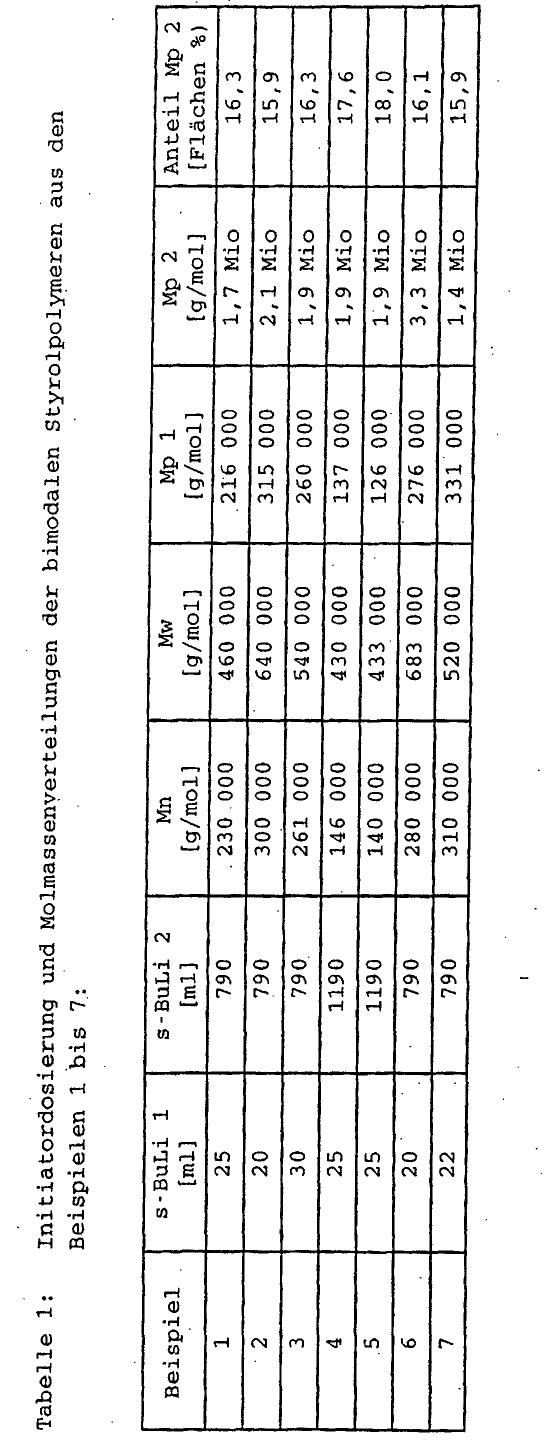

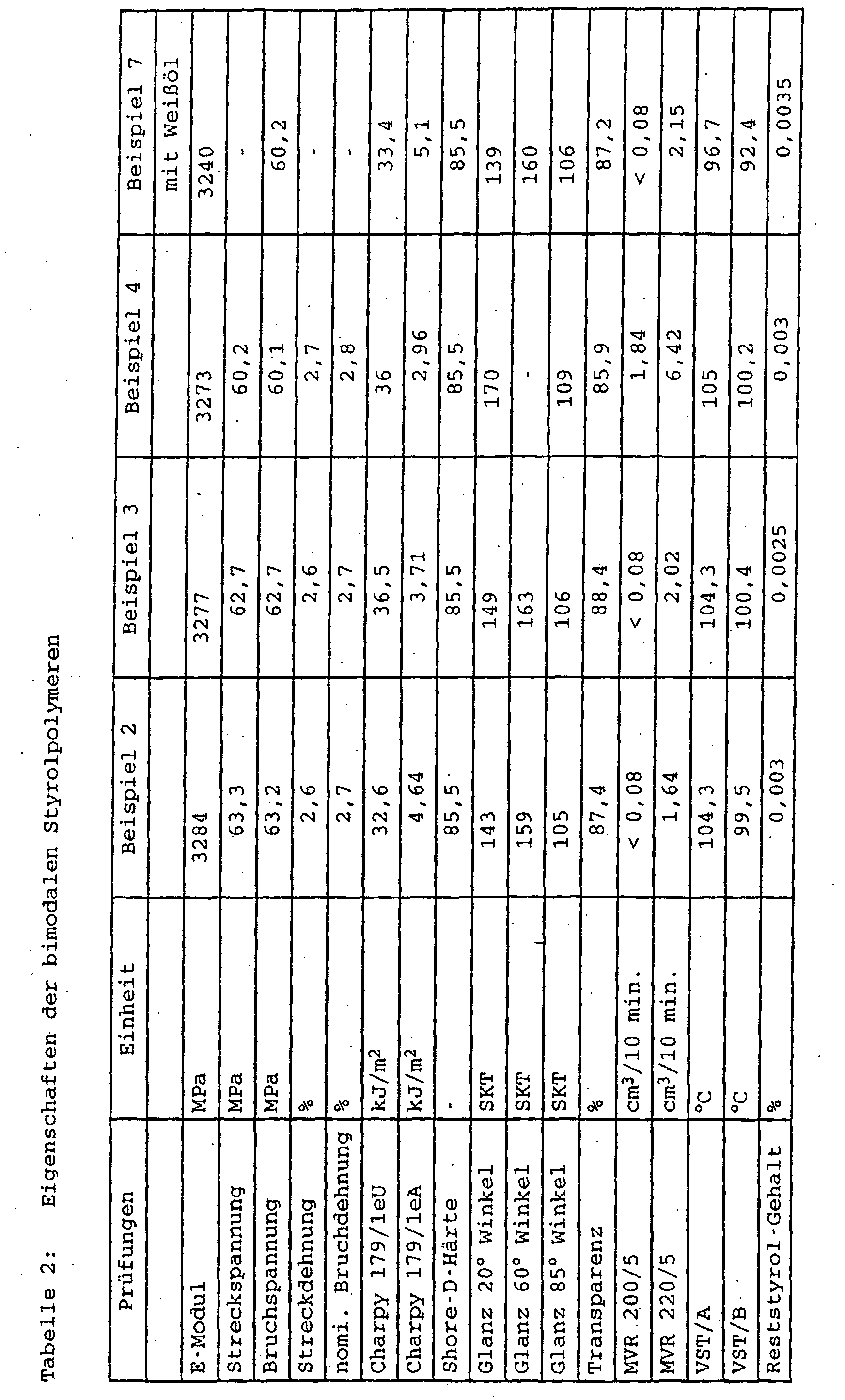

### Beispiel 8

Das bimodale Styrolpolymer aus Beispiel 7 wurde mit einem schlagfesten Polystyrol (schlagfestes Polystyrol 486 M der Fa. BASF AG) mit einem Schmelzflußindex MVR (200/5) von 3 und einer Charpy Kerbschlagzähigkeit bei 23°C von 12 im Gewichtsverhältnis 1 : 1 auf einem Extruder zu 1 mm dicken Folien extrudiert. Die Ergebnisse der mechanischen Prüfungen sind in Tabelle 3 zusammengestellt.

### Vergleichsversuch V1

In Beispiel 8 wurde anstelle des bimodalen Styrolpolymeren ein Standard-Polystyrol (Standard-Polystyrol 165H der Fa. BASF AG) mit einem Schmelzflußindex MVR (200/5) von 2,5 und einer Charpy-Schlagzähigkeit bei 23°C von 23 mit dem schlagfesten Polystyrol (schlagfestes Polystyrol 486 M der Fa. BASF AG) mit sonst gleichen Parametern extrudiert. Die Ergebnisse der mechanischen Prüfungen sind in Tabelle 3 zusammengestellt.

Die nach Beispiel 8 mit den erfindungsgemäßen, bimodalen Styrolpölymeren hergestellten Folien zeigen gegenüber den Folien aus dem Vergleichsversuch V1 bei gleicher Steifigkeit eine deutlich höhere nominale Bruchdehnung (Maß für die Zähigkeit).

**Tabelle 3:**

| Mechanische Werte an 1 mm starken Folien der Polymermischung aus Beispiel 8 und dem Vergleichsversuch V1: | | | | |
|---|---|---|---|---|
| Prüfungen | | Einheit | V1 | Beispiel 8 |
| E-Modul | längs | MPa | 2507 | 2552 |
| Streckspannung | längs | MPa | 30 | 32,2 |
| Bruchspannung | längs | MPa | 23,2 | 25,4 |
| Streckdehnung | längs | % | 1,4 | 1,6 |
| nomi. Bruchdehnung | längs | % | 18,7 | 22,9 |
| E-Modul | quer | MPa | 2455 | 2374 |
| Streckspannung | quer | MPa | 27,1 | 29,2 |
| Bruchspannung | quer | MPa | 20,3 | 20 |
| Streckdehnung | quer | % | 1,3 | 1,4 |
| nomi. Bruchdehnung | quer | % | 5,2 | 17,6 |

## Patentansprüche

1. Styrolpolymere mit mindestens bimodaler Molekulargewichtsverteilung, wobei der hochmolekulare Anteil, ermittelt aus der Molmassenverteilungsdarstellung, ein Molekulargewicht im Peakmaximum Mₚ von mindestens 800 000 g/mol aufweist und mindestens 5 Flächenprozent ausmacht, erhältlich durch anionische Polymerisation von vinylaromatischen Monomeren mit mindestens zweimaliger Initiatordosierung.

2. Polymerzusammensetzung, enthaltend
A) 5 bis 90 Gew.-% Styrolpolymere gemäß Anspruch 1 und
B) 10 bis 95 Gew.-% mindestens einem von A) verschiedenen Styrolpolymeren.

3. Polymerzusammensetzung nach Anspruch 2, enthaltend als Komponente B) ein radikalisch initiiertes Standard-Polystyrol oder schlagzäh modifiziertes Polystyrol.

4. Verwendung der Styrolpolymeren nach den Ansprüchen 1 bis 3 zur Herstellung von Fasern, Folien und Formkörpern.

5. Fasern, Folien und Formkörper erhältlich aus den Styrolpolymeren gemäß Anspruch 1 bis 3.

## Claims

1. A styrene polymer with at least bimodal molecular weight distribution, the high-molecular-weight fraction, determined from the molecular weight distribution curve, having a molecular weight of at least 800,000 g/mol at the peak maximum Mₚ and making up at least 5 percent by area, obtainable by anionic polymerization of vinylaromatic monomers, initiator being metered in at least twice.

2. A polymer formulation comprising
A) from 5 to 90% by weight of styrene polymers as claimed in claim 1 and
B) from 10 to 95% by weight of at least one styrene polymer different from A).

3. A polymer formulation as claimed in claim 2, comprising, as component B), a free-radical-initiated standard polystyrene or impact-modified polystyrene.

4. The use of a styrene polymer as claimed in any of claims 1 to 3 for producing fibers, sheeting and moldings.

5. A fiber, sheeting or a molding obtainable from a styrene polymer as claimed in any of claims 1 to 3.

## Revendications

1. Polymères de styrène à distribution au moins bimodale de poids moléculaire, où la fraction à haut poids moléculaire, déterminée sur base du graphique de distribution de masse molaire, présente un poids moléculaire au pic maximum Mₚ d'au moins 800.000 g/mole et représente au moins 5% en surface, que l'on peut obtenir par polymérisation anionique de monomères vinylaromatiques avec addition d'initiateur répétée au moins deux fois.

2. Composition polymère, contenant
A) 5 à 90% en poids de polymères de styrène selon la revendication 1 et
B) 10 à 95% en poids d'au moins un polymère de styrène différent de A).

3. Composition polymère selon la revendication 2, contenant en tant que composant B) un polystyrène standard à initiation radicalaire ou un polystyrène modifié à haute résistance au choc.

4. Utilisation des polymères de styrène selon les revendications 1 à 3 pour la production de fibres, feuilles et corps moulés.

5. Fibres, feuilles et corps moulés que l'on peut obtenir à partir des polymères de styrène selon les revendications 1 à 3.
